# EUROPÄISCHE PATENTANMELDUNG

(11) **EP 3 474 112 A2**
(43) Veröffentlichungstag der Anmeldung: **24.04.2019**
(21) Anmeldenummer: 18199074.8
(22) Anmeldetag: 08.10.2018
(51) Int. Cl.: G05D 23/19

(54) **VERFAHREN ZUM ERMITTELN EINER ERWARTETEN TEMPERATURKURVE SOWIE VERFAHREN ZUM ERMITTELN EINES HEIZ- UND/ODER KÜHLPROGRAMMS EINES HEIZ- UND/ODER KÜHLSYSTEMS**

(30) Priorität: 19.10.2017 DE 102017218742
(71) Anmelder: Robert Bosch GmbH, 70442 Stuttgart (DE)
(72) Erfinder: Witzel, Michael, 70734 Fellbach (DE); Haeussermann, Kai, 73630 Remshalden (DE)

(57) **Zusammenfassung**

Die Erfindung betrifft ein Verfahren (10) zum Ermitteln einer erwarteten Temperaturkurve (12) beim Aufheizen oder Kühlen eines Raums durch ein Heiz- und/oder Kühlsystem (58) zum Erreichen einer vorgegebenen Soll-Temperatur (28) im Raum - wobei die erwartete Temperaturkurve (12) einen zukünftigen Zeitverlauf einer Ist-Temperatur des Raums vorhersagt. Das Verfahren umfasst die folgenden Schritte:
• Ermitteln wenigstens eines Einflussfaktors, insbesondere einer Außentemperatur,
• Ermitteln der erwarteten Temperaturkurve (12) in Abhängigkeit vom wenigstens einem Einflussfaktor, von der Soll-Temperatur und von historischen Temperaturdaten, wobei die erwartete Temperaturkurve ein Zeitintervall zum Erreichen der Soll-Temperatur (28) umfasst und die historischen Temperaturdaten durch früher abgespeicherte Temperaturkurven gebildet werden.

Die Erfindung betrifft auch ein Verfahren (36) zum Ermitteln eines Heiz- und/oder Kühlprogramms (32) eines Heiz- und/oder Kühlsystems zum Erreichen eines vorgegebenen Temperaturzeitverlaufs (38), ein Computerprogramm, welches dazu eingerichtet ist, alle Schritte eines Verfahrens (10, 36) gemäß der vorliegenden Erfindung auszuführen, ein maschinenlesbares Speichermedium, auf dem das Computerprogramm gemäß der vorliegenden Erfindung gespeichert ist, sowie ein Heiz- und/oder Kühlsystem (58) - insbesondere ein System zur Hausautomation - oder wenigstens eine Komponente (60, 62, 66) des Heiz- und/oder Kühlsystems (58), das bzw. die durch eine entsprechende integrierte Schaltung und/oder ein auf einem Speicher gespeichertes Computerprogramm gemäß der vorliegenden Erfindung dazu eingerichtet ist, ein Verfahren (10, 36) gemäß der vorliegenden Erfindung auszuführen.

## Beschreibung

Die Erfindung betrifft ein Verfahren zum Ermitteln einer erwarteten Temperaturkurve beim Aufheizen oder Kühlen eines Raums. Die Erfindung betrifft auch ein Verfahren zum Ermitteln eines Heiz- und/oder Kühlprogramms eines Heiz- und/oder Kühlsystems zum Erreichen eines vorgegebenen Temperaturzeitverlaufs, ein Computerprogramm, das zum Ausführen einer Ausführungsform des Verfahrens gemäß der vorliegenden Erfindung eingerichtet ist, ein maschinenlesbares Speichermedium mit einem Computerprogramm gemäß der vorliegenden Erfindung sowie ein Heiz- und/oder Kühlsystem oder wenigstens eine Komponente des Heiz- und/oder Kühlsystems.

### Stand der Technik

Es sind Verfahren zum Regeln von Heizsystemen bekannt, bei denen der Benutzer ein Heizprogramm vordefinieren kann, nach dem eine Ist-Temperatur eines Raums auf eine voreingestellte Soll-Temperatur geregelt wird. Hierbei erzeugt das Heizsystem so lange Heizleistung, die insbesondere zur Erwärmung eines Raums verwendet wird, bis die gemessene Ist-Temperatur die Soll-Temperatur erreicht hat. Bei solchen Systemen kommt es häufig zu einem Überschwingen der Temperatur. Ferner ist Nachteilig, dass bei einem solchen Verfahren eine bedarfsgerechte Regelung nicht, bzw. nur erschwert möglich ist. Auch ist es nicht möglich, dass die gewünschte Soll-Temperatur zu einem gewünschten Zeitpunkt erreicht wird. Durch ein nicht optimal eingestelltes Heizprogramm ist es möglich, dass Heizenergie verschwendet wird und/oder die voreingestellte Soll-Temperatur nicht erreicht wird.

### Offenbarung der Erfindung

### Vorteile

Die vorliegenden Erfindung beschreibt ein Verfahren zum Ermitteln einer erwarteten Temperaturkurve beim Aufheizen oder Kühlen eines Raums durch ein Heiz- und/oder Kühlsystems zum Erreichen einer vorgegebenen Soll-Temperatur im Raum - wobei die erwartete Temperaturkurve einen zukünftigen Zeitverlauf einer Ist-Temperatur des Raums vorhersagt. Das Verfahren umfasst die folgenden Schritte:
- Ermitteln wenigstens eines Einflussfaktors, insbesondere einer Außentemperatur,
- Ermitteln der erwarteten Temperaturkurve in Abhängigkeit vom wenigstens einem Einflussfaktor, von der Soll-Temperatur und von historischen Temperaturdaten, wobei die erwartete Temperaturkurve ein Zeitintervall zum Erreichen der Soll-Temperatur umfasst und die historischen Temperaturdaten durch früher abgespeicherte Temperaturkurven gebildet werden.

Das hat den Vorteil, dass durch die erwartete Temperaturkurve eine Vorhersage möglich ist, wie lange das Aufheizen oder Kühlen eines Raums voraussichtlich dauern wird. Auf diese Weise ist es insbesondere möglich, eine Soll-Temperatur zu einem vorgegebenen Zeitpunkt zu erreichen.

Unter einem Einflussfaktor soll insbesondere ein Parameter verstanden werden, der sich auf das Aufheizen oder Kühlen eines Raums auswirkt. Insbesondere soll durch einen Einflussfaktor ein Einwirken von äußeren Bedingungen beschreibbar sein. Beispiele für Einflussfaktoren sind eine Außentemperatur, eine Wetterlage, eine Sonneneinstrahlung, eine Windstärke oder eine Bewölkung. Ein Einflussfaktor kann auch eine statische Größe sein, beispielsweise eine geographische Position des Raums bzw. des den Raum enthaltenden Gebäudes. Die geographische Position kann relevant sein, weil die Nähe zu großen Wärmespeichern - etwa zu einem Fluss oder Meer - und/oder eine Besiedelungsdichte einen Einfluss auf das Aufheizen oder Kühlen eines Raums haben kann. Ein Einflussfaktor kann auch eine Zeit sein, beispielsweise die aktuelle Tageszeit oder der aktuelle Wochentag oder der Monat. Zum Beispiel ist es denkbar, dass eine Nachbarwohnung an Werktagen leer steht und nicht beheizt wird.

Das Heiz- und/oder Kühlsystem kann die Einflussfaktoren durch eigene Sensoren erfassen, beispielsweise durch einen Außentemperatursensor. Es ist auch möglich, dass das Heiz- und/oder Kühlsystem die Einflussfaktoren empfängt, insbesondere durch eine Backend-Anbindung zu entsprechenden Services, wie etwa Wetterdiensten oder Mikrowetterservices durch Zurverfügungstellung von eigenen Sensorwerte und Zusammenschluss zu Verbänden. Die Zurverfügungstellung von eigenen Sensordaten und der Zusammenschluss zu Verbänden- beispielsweise mit Nachbarn, wobei jeder Nachbar seine Sensordaten zur Verfügung stellt - ermöglichen es, unabhängig von externen Diensten zu sein.

Beim Aufheizen oder Kühlen eines Raums gibt es viele Einflüsse, welche die Temperaturkurve bzw. das Zeitintervall beeinflussen. Manche dieser Einflüsse lassen sich nicht einfach durch Einflussfaktor bzw. Parameter beschreiben, die einfach zu ermitteln sind. Zu solchen Einflüssen zählen beispielsweise Raumelemente wie etwa Wände, Decken, Böden, Türen, Möbel, Fenster oder Einrichtungsgegenstände. Der Vorteil des Verfahrens gemäß der vorliegenden Erfindung ist, dass solche Einflüsse, insbesondere statische Einflüsse, durch die historischen Temperaturdaten weitgehend automatisch berücksichtigt werden.

Darunter, dass die erwartete Temperaturkurve in Abhängigkeit von den historischen Temperaturdaten ermittelt wird, soll insbesondere auch verstanden werden, dass die erwartete Temperaturkurve mit einem Modell bzw. Algorithmus ermittelt wird, welches bzw. welcher in Abhängigkeit von den historischen Temperaturdaten ermittelt wurde. Beispielsweise ist es denkbar, dass die Temperaturkurve mit Hilfe einer analytischen Funktion bestimmt wird, welche den wenigsten einen Einflussfaktor als Eingabeparameter hat. Die analytische Funktion wird durch Fitting an die historischen Temperaturdaten ermittelt. Bevorzugt ist in den historischen Temperaturdaten zu jeder abgespeicherten Temperaturkurve der jeweils dazugehörige, wenigstens eine Einflussfaktor gespeichert. Vorteilhaft wird der wenigstens eine Einflussfaktor zusammen mit der Temperaturkurve ermittelt.

Die erwartete Temperaturkurve kann insbesondere durch eine Gerade dargestellt werden. Vorteilhaft verläuft die Temperaturkurve welche durch eine erste Temperaturbeispielsweise eine aktuell vorliegenden Ist-Temperatur - bei einer ersten Zeit - beispielsweise eine aktuell vorliegende Zeit - und durch die Soll-Temperatur bei einer zweiten Zeit verläuft. Das Zeitintervall der Temperaturkurve beginnt mit der ersten Zeit und endet mit der zweiten Zeit. Es ist möglich, dass die Temperaturkurve eine höhere Zeitauflösung aufweist. Beispielsweise kann die Temperaturkurve ein Polygonzug aus mehreren Temperaturwerten bei unterschiedlichen Zeitenpunkten umfassen. Es ist auch denkbar, dass die Temperaturkurve durch eine analytische Funktionsvorschrift definiert ist, welche einem Zeitpunkt einen Temperaturwert zuordnet. Insbesondere kann die Temperaturkurve durch eine polynomiale und/oder exponentielle und/oder logarithmische und/oder rationale Funktion beschrieben werden.

Durch die in den Unteransprüchen aufgeführten Merkmale sind vorteilhafte Weiterbildungen des erfindungsgemäßen Verfahrens möglich.

Wird die Ist-Temperatur des Raums in Abhängigkeit von einer Zeit als Temperaturkurve erfasst und der wenigstens eine Einflussfaktor zusammen mit der Temperaturkurve der Ist-Temperatur in den historischen Temperaturdaten gespeichert, hat das den Vorteil, dass die historischen Temperaturdaten auf diese Weise stets aktualisiert werden. Auf diese Weise ist das Verfahren besonders zuverlässig.

Wird beim Aufheizen oder Kühlen des Raumes eine Temperaturkurve erfasst und der wenigstens eine Einflussfaktor ermittelt und nach Erreichen der Soll-Temperatur die Temperaturkurve zusammen mit dem wenigstens einem Einflussfaktor in den historischen Temperaturdaten gespeichert, hat das den Vorteil, dass die auf diese Weise gespeicherten Temperaturkurven eine Vorhersagequalität des Verfahrens erhöhen. Insbesondere beschreiben so gespeicherte Temperaturkurven einen Temperaturunterschied, der für einen Betrieb des Heiz- und/oder Kühlsystems besonders relevant ist.

Das Verfahren wird weiter verbessert, wenn als Einflussfaktor eine Wetterlage ermittelt wird. Die Wetterlage ist ein besonders einflussreicher Einflussfaktor. Eine Wetterlage kann insbesondere das aktuelle Wetter einer Region, in der sich der Raum bzw. das Gebäude befindet, beschreiben bzw. den aktuellen Zustand der Atmosphäre in der Region beschreiben. Die Wetterlage kann beispielsweise durch eine Angabe "sonnig", "regnerisch" oder "stürmisch" beschrieben werden. Es ist auch möglich, dass die Wetterlage durch die Angabe von meteorologischen Parametern beschrieben wird, beispielsweise Luftdruck, Windstärke, Niederschlagsmenge, Lufttemperatur oder Luftfeuchte. Weiterhin ist es denkbar, dass die Wetterlage langfristige Wetterzustände beschreibt, beispielsweise "Kaltfront", "Frostperiode" oder "Inversionswetterlage".

Wird die erwartete Temperaturkurve durch ein Modell ermittelt, wobei das Modell in Abhängigkeit von den historischen Temperaturdaten erstellt wird, wird das Verfahren besonders robust und zuverlässig. Insbesondere kann das Modell ein Machine-Learning-Zuordnungsmodell bzw. ein intelligenter Algorithmus sein, der mit den historischen Temperaturdaten trainiert wird. Die historischen Temperaturdaten werden auf diese Weise insbesondere bei der Ermittlung der erwarteten Temperaturkurve besonders effizient berücksichtigt. Insbesondere lassen sich auf diese Weise die historischen Temperaturdaten automatisch korrekt berücksichtigen.

Die vorliegende Erfindung beschreibt auch ein Verfahren zum Ermitteln eines Heiz- und/oder Kühlprogramms eines Heiz- und/oder Kühlsystems zum Erreichen eines vorgegebenen Temperaturzeitverlaufs - wobei der Temperaturzeitverlauf aus wenigstens einem Wertepaar aus einer vorgegebenen Soll-Temperatur zu einem vorgegebenen Zeitpunkt gebildet wird. Das Verfahren umfasst die Schritte:
- Ermitteln von wenigstens einer Temperaturkurve mit einem Verfahren gemäß der vorliegenden Erfindung,
- Ermitteln des Heiz- und/oder Kühlprogramms in Abhängigkeit von der wenigstens einen Temperaturkurve.

Das Verfahren hat den Vorteil, dass ein Zeitverlauf der Ist-Temperatur weitgehend einem vorgegebenen Temperaturzeitverlauf entspricht. Es ist nicht notwendig, das Heiz- und/oder Kühlprogramm manuell an einen gewünschten Temperaturzeitverlauf anzupassen. Das erhöht den Bedienkomfort des Heiz- und/oder Kühlsystems.

Unter einem Heiz- und/oder Kühlprogramm soll insbesondere ein Zeitplan verstanden werden, in dem vorgegeben ist, zu welchem Zeitpunkt das Heiz- und/oder Kühlsystem die Ist-Temperatur des Raums auf eine im Zeitplan gespeicherte Soll-Temperatur regeln soll. Vorteilhaft umfasst der Zeitplan eine Liste aus Wertepaaren, die jeweils aus einem Zeitpunkt und einer dazugehörigen Soll-Temperatur gebildet werden. Sobald ein im Zeitplan hinterlegter Zeitpunkt erreicht ist, beginnt das Heiz- und/oder Kühlsystem die Ist-Temperatur auf die entsprechende Soll-Temperatur zu regeln. Das Heiz- und/oder Kühlprogramm kann auch ein Steuersignal an eine Komponente des Heiz- und/oder Kühlsystems umfassen. Beispielsweise kann ein Heizprogramm wenigstens einen Steuerbefehl an einen Heizwasserboiler aufweisen, insbesondere kann das Heizprogramm zu jedem hinterlegten Zeitpunkt eine dazugehörige Soll-Temperatur und/oder ein dazugehöriges Steuersignal aufweisen.

Unter einem Temperaturzeitverlauf soll insbesondere ein Zeitplan verstanden werden, in dem vorgegeben ist, zu welchem Zeitpunkt welche Temperatur im Raum vorliegen soll. Vorteilhaft umfasst der Temperaturzeitverlauf eine Liste aus Wertepaaren, die jeweils aus einem Zeitpunkt und einer dazugehörigen Soll-Temperatur gebildet werden. Insbesondere kann der Temperaturzeitverlauf durch einen Benutzer des Heiz- und/oder Kühlsystems vorgegeben werden. Insbesondere beschreibt der Temperaturzeitverlauf eine durch den Benutzer gewünschte Ist-Temperatur des Raums.

Das Verfahren wird weiter verbessert, wenn eine Warnung angezeigt wird, wenn der vorgegebene Temperaturzeitverlauf nicht erreicht werden kann, insbesondere wenn eine im Temperaturzeitverlauf vorgegebene Soll-Temperatur nicht zum vorgegebenen Zeitpunkt erreichbar ist. Das ermöglicht eine Korrektur des vorgegebenen Temperaturzeitverlaufs, der beispielsweise aufgrund der Einflussfaktoren nicht realisierbar ist. Auf diese Weise wird ein ungünstiger und ineffizienter Betrieb des Heiz- und/oder Kühlsystems vermieden.

Das Verfahren wird besonders zuverlässig und präzise, wenn es einen Lernmodus aufweist, welcher die Schritte umfasst:
- Betreiben des Heiz- und/oder Kühlsystems mit dem Temperaturzeitverlauf als Heiz- und/oder Kühlprogramm,
- Erfassen einer Temperaturkurve und Ermitteln von wenigstens einem Einflussfaktor,
- Speichern der Temperaturkurve, zusammen mit dem wenigsten einen Einflussfaktor, in den historischen Temperaturdaten.
- Beenden des Lernmodus sobald die historischen Temperaturdaten eine ausreichende Vorhersagequalität ermöglichen.

Unter "Betreiben des Heiz- und/oder Kühlsystems mit dem Temperaturzeitverlauf als Heiz- und/oder Kühlprogramm" soll insbesondere verstanden werden, dass die Wertepaare aus jeweils einem Zeitpunkt und einer Soll-Temperatur aus dem vorgegebenen Temperaturzeitverlauf im Betrieb des Heiz- und/oder Kühlsystems als entsprechende Wertepaare im Heiz- und/oder Kühlprogramm verwendet werden. Auf diese Weise wird der vorgegebene Temperaturzeitverlauf näherungsweise erreicht. Auf diese Weise können die historischen Temperaturdaten - durch im Betrieb des Heiz- und/oder Kühlsystems erfasste Temperaturkurven und den jeweils dazugehörigen ermittelten wenigstens einen Einflussfaktor - erweitert werden.

Dabei ist darunter, dass die historischen Temperaturdaten eine ausreichenden Vorhersagequalität ermöglichen insbesondere zu verstehen, dass eine in Abhängigkeit von den historischen Temperaturdaten ermittelte erwartete Temperaturkurve mit einer unter den gleichen Bedingungen tatsächlich erfassten Temperaturkurve oft genug weitgehend übereinstimmt bzw. eine vorgegebene maximale Abweichung nicht überschreitet. Beispielsweise ist es denkbar, dass eine mittlere quadratische Abweichung der erwarteten Temperaturkurve von der erfassten Temperaturkurve ermittelt wird. Die historischen Temperaturdaten ermöglichen die ausreichende Vorhersagequalität beispielsweise, wenn die letzten 20, bevorzugt letzten 50, besonders bevorzugt letzten 100 ermittelten erwarteten Temperaturkurven um weniger als 15% , bevorzugt weniger als 10%, besonders bevorzugt weniger als 5% von den danach tatsächlich erfassten Temperaturkurven abweichen. Hier sind auch beliebige andere Kriterien für die Vorhersagequalität denkbar.

Es ist auch möglich, dass gefolgert wird, dass die historischen Temperaturdaten eine ausreichende Vorhersagequalität ermöglichen, wenn die Menge der historischen Temperaturdaten groß genug ist, beispielsweise wenn die Menge der historischen Temperaturdaten mehr als 100, bevorzugt mehr als 500, besonders bevorzugt mehr als 1000 Temperaturkurven aufweist.

Sobald die historischen Temperaturdaten eine ausreichende Vorhersagequalität ermöglichen, kann in Abhängigkeit von diesen historischen Temperaturen das Heiz- und/oder Kühlprogramm zum Erreichen des vorgegebenen Temperaturzeitverlaufs neu ermittelt werden.

Durch das Erweitern der historischen Temperaturdaten wird die Vorhersagequalität beim Ermitteln der erwarteten Temperaturkurve verbessert. Es ist denkbar, dass aus den historischen Temperaturdaten nicht mehr relevante Temperaturkurven entfernt werden. Beispielsweise können Temperaturkurven, die älter sind als eine vorgegebene Maximalzeit, beispielsweise 6 Monate, aus den historischen Temperaturdaten entfernt werden. Es ist auch denkbar, dass nach einer Wartung und/oder Neuinstallation von Komponenten des Heiz- und/oder Kühlsystems die historischen Temperaturdaten ganz oder teilweise gelöscht werden. Weiterhin ist es denkbar, dass nachdem eine erwartete Temperaturkurve ermittelt wurde, die Qualität dieser Vorhersage überprüft wird. Weicht der tatsächliche, erfasste Verlauf der Temperaturkurve zu oft und/oder zu stark von der erwarteten Temperaturkurve ab, kann eine Aktualisierung der historischen Temperaturdaten ausgelöst werden. Eine Aktualisierung der historischen Temperaturdaten kann insbesondere das Erfassen von neuen Temperaturkurven und/oder das Löschen von nicht mehr relevanten Temperaturkurven aus den historischen Temperaturdaten umfassen. Eine Aktualisierung kann insbesondere das Löschen von Temperaturkurven umfassen, die zu stark von tatsächlichen Verlauf von neu erfassten Temperaturkurven mit weitgehend oder hinreichend ähnlichen Einflussfaktoren abweichen.

Wird das Verfahren und/oder wenigstens ein Schritt des Verfahrens periodisch wiederholt, insbesondere in einstellbaren Zeitintervallen bzw. mit einstellbaren Periodendauern, ermöglicht das eine Anpassung an sich verändernde Einflüsse und/oder Umgebungsbedingungen.

Ein weiterer Aspekt der vorliegenden Erfindung ist ein Computerprogramm, welches dazu eingerichtet ist, eine Ausführungsform des Verfahrens gemäß der vorliegenden Erfindung auszuführen. Insbesondere veranlasst das Computerprogramm ein Rechengerät, eine Ausführungsform des Verfahrens gemäß der vorliegenden Erfindung durchzuführen, wenn es auf dem Rechengerät ausgeführt wird.

Ein weiterer Aspekt der vorliegenden Erfindung ist ein maschinenlesbares Speichermedium. Auf dem maschinenlesbaren Speichermedium ist das Computerprogramm gemäß der vorliegenden Erfindung gespeichert.

Eine weitere vorteilhafte Ausführungsform manifestiert sich in einem Heiz- und/oder Kühlsystem - insbesondere ein System zur Hausautomation - oder wenigstens eine Komponente des Heiz- und/oder Kühlsystems, das bzw. die durch eine entsprechende integrierte Schaltung und/oder ein auf einem Speicher gespeichertes Computerprogramm dazu eingerichtet ist, ein Verfahren gemäß der vorstehenden Ausführungen auszuführen. Auf diese Weise kann insbesondere ein Energieverbrauch der Heiz- und/oder Kühlsystems gesenkt werden.

Unter System zur Hausautomation oder Smart Home System ist ein System zur automatischen oder wenigstens teilautomatischen Durchführung und/oder Steuerung und/oder Regelung von Funktionsabläufen in einem Gebäude zu verstehen, insbesondere von Wohnhäusern, insbesondere nach vorgegebenen Einstellparametern. Insbesondere umfasst ein System zur Hausautomation die Steuerung und/oder Regelung von Funktionsabläufen der Gebäudesicherheit bzw. Gebäudeüberwachung und/oder des Energiemanagements und/oder der Gebäudeheizung und/oder der Warmwasserversorgung und/oder der Beleuchtung und/oder von Haushaltsgeräten und/oder von Unterhaltungselektronik. Ein System zur Hausautomation kann beispielsweise ein Heizsystem und/oder ein Kühlsystem und/oder ein Beleuchtungssystem umfassen. Insbesondere sind die Vorrichtungen eines Systems zur Hausautomation, beispielsweise Sensoren, Aktoren, Bedienelemente, Verbraucher und sonstige technische Einheiten, miteinander vernetzt. Ein System zur Hausautomation ist oft zur Kommunikation bzw. zum Datenaustausch mit einem entfernten, bevorzugt mobilen Rechengerät eingerichtet, beispielsweise über das Internet, insbesondere durch eine Cloud. Auf diese Weise können Funktionsabläufe im Gebäude ferngesteuert werden, beispielsweise die gewünschte Soll-Temperatur des Raums eingestellt werden. Es kann auch möglich sein, Informationen aus dem Gebäude zu empfangen, beispielsweise eine Aufnahme einer Überwachungskamera oder eine gemessene Ist-Temperatur des Raums. Mit Smart Home System ist manchmal ein System zur Hausautomation gemeint, bei dem eine intelligente Steuerung im Vordergrund steht, beispielsweise durch selbstlernende Algorithmen.

Moderne Heiz- und/oder Kühlsysteme ermöglichen die separate Erwärmung und oder Kühlung einzelner Räume. Insbesondere weisen hierzu die einzelnen Räume Thermostate mit einem Temperatursensor auf. Der Temperatursensor ermöglicht die Ermittlung der Raumlufttemperatur, insbesondere der Ist-Temperatur des Raums. Bevorzugt hat jeder Raum ein eigenes Heiz- und/oder Kühlprogramm bzw. einen eigenen vorgegebenen Temperaturzeitverlauf.

Beispiele für eine Komponente des Heiz- und/oder Kühlsystems sind insbesondere ein Thermostat, ein Heizkörperthermostat, eine Raumkontrolleinheit oder eine Steuereinheit eines Heiz- und/oder Kühlsystems. Beispielsweise kann das Heizprogramm durch einen oder mehrere elektronischen Heizkörperthermostaten ausgeführt wird. Es ist auch denkbar, dass eine Heizleistung eines Boilers für Heizwasser in Abhängigkeit vom Heizprogramm eingestellt wird.

Besonders vorteilhaft ist die Verwendung eines Thermostats - insbesondere eines Heizkörperthermostats - und einer Steuereinheit eines Heizsystems, die dazu eingerichtet sind, ein Verfahren gemäß der vorliegenden Erfindung auszuführen. Auf diese Weise ist es möglich, besonders einfach und effizient das Verfahren gemäß der vorliegenden Erfindung auszuführen.

### Zeichnungen

In den Zeichnungen sind Ausführungsbeispiele des Verfahrens zum Ermitteln einer erwarteten Temperaturkurve beim Aufheizen oder Kühlen eines Raums gemäß der vorliegenden Erfindung, eines Verfahrens zum Ermitteln eines Heiz- und/oder Kühlprogramms eines Heiz- und/oder Kühlsystems zum Erreichen eines vorgegebenen Temperaturzeitverlaufs gemäß der vorliegenden Erfindung sowie Komponenten des Heiz- und/oder Kühlsystems gemäß der vorliegenden Erfindung dargestellt und in der nachfolgenden Beschreibung näher erläutert. Es zeigen
Figur 1 das Verfahren zum Ermitteln einer erwarteten Temperaturkurve beim Aufheizen oder Kühlen eines Raums gemäß der vorliegenden Erfindung,
Figur 2 eine Darstellung von Temperaturkurven,
Figur 3 ein Heizprogramm,
Figuren 4 und 6 das Verfahren zum Ermitteln eines Heiz- und/oder Kühlprogramms eines Heiz- und/oder Kühlsystems zum Erreichen eines vorgegebenen Temperaturzeitverlaufs gemäß der vorliegenden Erfindung sowie eine Variante des Verfahrens,
Figur 5 eine Temperaturzeitkurve und ein Heizprogramm und
Figur 7 Komponenten des Heiz- und/oder Kühlsystems gemäß der vorliegenden Erfindung.

### Beschreibung

In den verschiedenen Ausführungsvarianten erhalten gleiche Teile bzw. Schritte die gleichen Bezugszahlen.

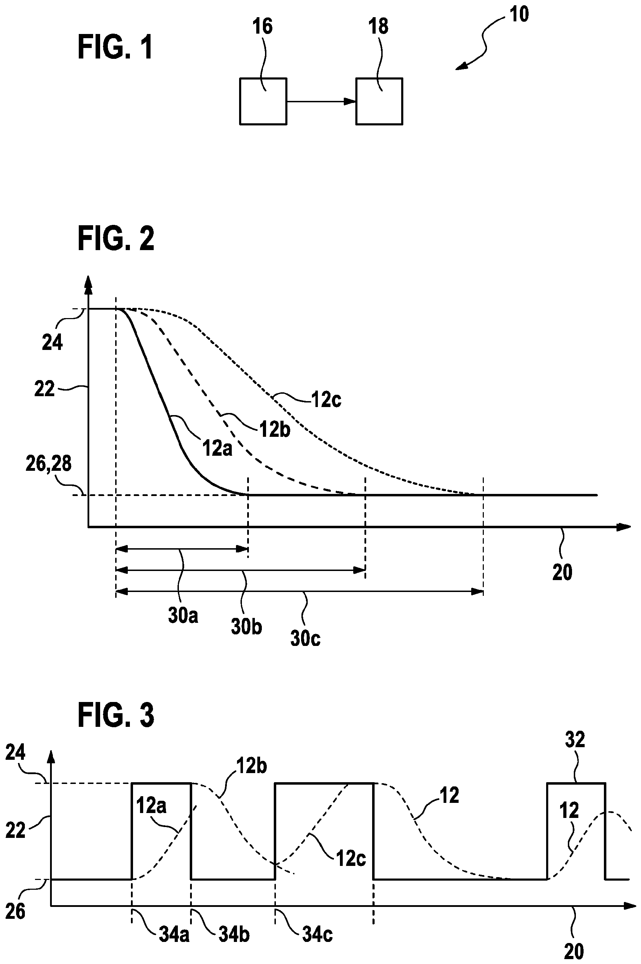

In Figur 1 ist ein Verfahren 10 zum Ermitteln einer erwarteten Temperaturkurve 12 beim Aufheizen oder Kühlen eines Raums durch ein Heizsystem 58 zum Erreichen einer vorgegebenen Soll-Temperatur 28 im Raum abgebildet.

In einem ersten Schritt 16 werden zwei Einflussfaktoren ermittelt. Im Ausführungsbeispiel ist die Außentemperatur ein Einflussfaktor. Die Außentemperatur wird von einem Außentemperatursensor 62 erfasst. Der Außentemperatursensor 62 sendet die erfasste Außentemperatur an das Heizsystem 58. Im Ausführungsbeispiel ist die Wetterlage ein Einflussfaktor. Im Ausführungsbeispiel umfasst die Wetterlage eine regionale mittlere Lufttemperatur, eine Luftfeuchte und eine voraussichtliche Anzahl von Sonnenstunden. Die Wetterlage wird durch das Heizsystem 58 von einem internetbasierten Wetterdienst empfangen.

In einem zweiten Schritt 18 wird die erwartete Temperaturkurve 12 ermittelt. Die erwartete Temperaturkurve 12 wird in Abhängigkeit von den beiden Einflussfaktoren, von der Soll-Temperatur 28 und von historischen Temperaturdaten ermittelt. Die historischen Temperaturdaten wurden im früheren Betrieb des Heizsystems 58 erfasst. Die historischen Temperaturdaten sind in einem Speicher einer Steuereinheit 60 des Heizsystems 58 hinterlegt. In den historischen Temperaturdaten sind früher erfasste Temperaturkurven gespeichert. Zusammen mit einer früher erfassten Temperaturkurve sind auch die Werte der mit ihr erfassten Einflussfaktoren gespeichert.

Im Ausführungsbeispiel wird die erwartete Temperaturkurve 12 durch ein Machine-Learning-Zuordnungsmodell ermittelt, wobei das Machine-Learning-Zuordnungsmodell mit den historischen Temperaturdaten trainiert wird. Im Ausführungsbeispiel basiert das Machine-Learning-Zuordnungsmodell auf einem neuronalen Netzwerk. In alternativen Ausführungen basiert das Machine-Learning-Zuordnungsmodell auf Deep-Learning, einer Support Vector Machine (SVM), selbstorganisierenden Karten (self-organizing map, SOM) oder einem k-Nearest-Neigbor Algorithmus (kNN). Die erwartete Temperaturkurve 12 wird durch die Steuereinheit 60 des Heizsystems 58 ermittelt.

Figur 2 zeigt drei unterschiedliche erwartete Temperaturkurven 12a, 12b und 12c. Auf einer Abszissenachse 20 ist eine Zeit abgebildet. Auf einer Ordinatenachse 22 ist eine erwartete Ist-Temperatur abgebildet. Die drei in Figur 2 abgebildeten Temperaturkurven 20 beschreiben eine erwartete Temperaturentwicklung zwischen einer ersten Temperatur 24 und einer zweiten Temperatur 26. Die zweite Temperatur 26 ist eine Soll-Temperatur 28. Die drei Temperaturkurven 12a, 12b und 12c wurden jeweils mit unterschiedlichen Einflussfaktoren ermittelt. Die Temperaturkurven 12a, 12b und 12c weisen unterschiedliche Zeitintervalle 30a, 30b und 30c auf, in der die Soll-Temperatur 28 erreicht wird.

Im Ausführungsbeispiel haben die durch das Machine-Learning-Zuordnungsmodell zunächst in Abhängigkeit von den Einflussfaktoren ermittelten vorläufigen Temperaturkurven eine bestimmte Temperaturspanne, welche von den historischen Temperaturdaten abhängt. Ist diese Temperaturspanne ausreichend groß, wird die vorläufige Temperaturkurve als erwartete Temperaturkurve 12 gespeichert bzw. klassifiziert. Falls notwendig, wird in Schritt 18 die Temperaturspanne erhöht, indem die ermittelte Temperaturkurve durch ein lineares Regressionsmodell extrapoliert wird. In alternativen Ausführungen wird die ermittelte Temperaturkurve durch ein logarithmisches Regressionsmodell extrapoliert. Im Ausführungsbeispiel wird überprüft, ob die Ist-Temperatur bzw. erwartete Ist-Temperatur und die Soll-Temperatur 28 innerhalb der Temperaturspanne der vorläufigen Temperaturkurve liegen. Falls nein, wird die erwartete Temperaturkurve 12 durch Extrapolation der vorläufigen Temperaturkurve auf eine Temperaturspanne, welche die Ist-Temperatur bzw. erwartete Ist-Temperatur und die Soll-Temperatur 28 umfasst, ermittelt.

Figur 3 zeigt ein Heizprogramm 32. Das Heizprogramm 32 wird von der Steuereinheit 60 des Heizsystems 58 an einen Heizkörperthermostaten 66 übermittelt. Der Heizkörperthermostat 66 regelt die Ist-Temperatur des Raums auf die in Abhängigkeit von der Zeit eingestellten Soll-Temperatur 28. Im in Figur 3 abgebildeten Heizprogramm wechselt die Soll-Temperatur 28 zwischen der ersten Temperatur 24 und der zweiten Temperatur 26 bei vorgegebenen Zeitpunkten 34. Beispielsweise beginnt der Heizkörperthermostat 66 zum Zeitpunkt 34a die Ist-Temperatur im Raum auf die erste Temperatur 24 zu regeln. Zum Zeitpunkt 34b beginnt der Heizkörperthermostat 66 die Ist-Temperatur im Raum auf die zweite Temperatur 26 zu regeln.

Figur 3 zeigt ein nicht optimal eingestelltes Heizprogramm 32. Die erwartete Temperaturkurve 12a erreicht, beginnend mit Zeitpunkt 34a, die erste Temperatur 24 nicht vor dem Zeitpunkt 34b. Es ist bei den vorliegenden Einflussfaktoren voraussichtlich nicht möglich, zwischen den Zeitpunkten 34a und 34b die Ist-Temperatur auf die erste Temperatur 24 zu regeln, wenn die Ist-Temperatur vor dem Zeitpunkt 34a den Wert der zweiten Temperatur 26 hat.

Ausgehend von der ersten Temperatur 24 zum Zeitpunkt 34b ist es voraussichtlich nicht möglich, die zweite Temperatur 26 vor dem Zeitpunkt 34c zu erreichen. Die erwartete Temperaturkurve 12b fällt nicht schnell genug ab.

Die erste Temperatur 24 wird erreicht, sobald ab dem Zeitpunkt 34c auf diese geregelt wird. Allerdings wird die erste Temperatur 24 erst kurz vor dem Zeitpunkt 34d erreicht, ab dem die Ist-Temperatur wieder auf die zweite Temperatur 26 heruntergeregelt wird.

Wird im Ausführungsbeispiel die Ist-Temperatur auf eine Soll-Temperatur 28 geregelt, erfasst der Heizkörperthermostat 66 mit einem Temperatursensor die Ist-Temperatur als Funktion der Zeit. Die so erfasste Temperaturkurve wird an die Steuereinheit 60 übermittelt. Die Steuereinheit 60 erfasst die Einflussfaktoren und speichert diese zusammen mit der erfassten Temperaturkurve in den historischen Temperaturdaten.

Bevorzugt wird der wenigstens eine Einflussfaktor zu einer Zeit ermittelt, in der die Temperaturkurve erfasst wird. In alternativen Ausführungsformen wird die erfasste Temperaturkurve zusammen mit einem früher ermittelten wenigstens einen Einflussfaktor in den historischen Temperaturdaten gespeichert. Beispielsweise ist es denkbar, dass wenigstens ein Einflussfaktor täglich einmal morgens, zu einer vorgegebenen Uhrzeit ermittelt wird. Alle an diesem Tag bzw. in den nächsten 24 Stunden danach erfassten Temperaturkurven werden dann zusammen mit diesem wenigstens einen Einflussfaktor in den historischen Temperaturdaten gespeichert.

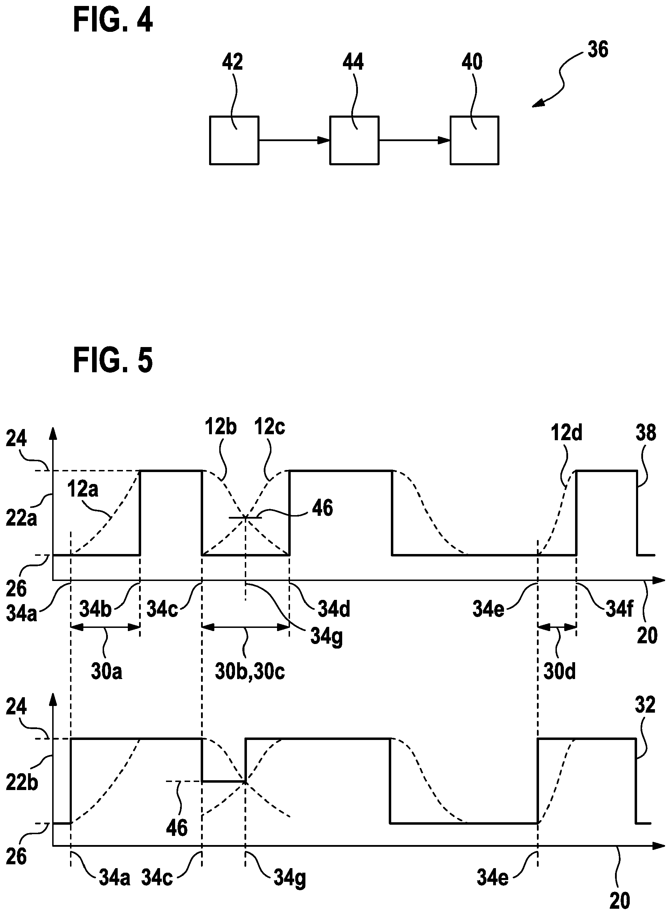

Figur 4 zeigt ein Verfahren 36 zum Ermitteln des Heizprogramms 32. Das Heizprogramm 32 wird in Abhängigkeit von einem vorgegebenen Temperaturzeitverlauf 38 ermittelt. Der Temperaturzeitverlauf 38 wird durch eine Benutzereingabe in der Steuereinheit 60 des Heizsystems 58 hinterlegt. Beispielsweise kann ein Benutzer über eine Bedieneinheit des Heizsystems 58 - etwa über ein Tablet, welches über WLAN mit der Steuereinheit 60 des Heizsystems 58 verbunden ist - den gewünschten Temperaturzeitverlauf 38 eingeben.

In einem Schritt 42 werden in Abhängigkeit von dem Temperaturzeitverlauf 38 Temperaturkurven 12 ermittelt. Zu jedem in Temperaturzeitverlauf 38 vorgegebenen Wertepaar aus Zeitpunkt 34 und Soll-Temperatur 28 wird, ausgehend von dem vorhergehenden Zeitpunkt 34 und der vorhergehenden Soll-Temperatur 28 eine Temperaturkurve 12 ermittelt. Die Temperaturkurve 12 durch die Steuereinheit 60 des Heizsystems 58 mit dem Verfahren 10 ermittelt.

In einem weiteren Schritt 44 wird das Heizprogramm 32 ermittelt. Das Heizprogramm 32 wird in Abhängigkeit von dem Temperaturzeitverlauf 38 und den in Schritt 42 ermittelten Temperaturkurven 12 ermittelt. Das Heizprogramm 32 wird so eingestellt, dass die Vorgaben durch den Temperaturzeitverlauf 38 weitgehend erreicht werden.

Oft ist es so, dass zum Energiesparen ein Temperaturzeitverlauf 38 mit einer niedrigen zweiten Temperatur 28 in den Zeiten vorgegeben ist, in denen der Raum bzw. das Gebäude weitgehend unbewohnt ist. In den Zeiten, in denen sich voraussichtlich Bewohner im Raum bzw. Gebäude aufhalten, ist im Temperaturzeitverlauf 38 eine erste Temperatur 24 vorgegeben, welche höher als die zweite Temperatur 26 ist. Im Ausführungsbeispiel wird beim Ermitteln der Heizkurve das Erreichen der höheren ersten Temperatur 24 gemäß des vorgegebenen Temperaturzeitverlaufs 38 priorisiert.

Figur 5 illustriert das Ermitteln des Heizprogramms 32. Auf einer oberen Ordinatenachse 22a sind die vorgegebenen Soll-Temperaturen des Temperaturzeitverlaufs 38 zusammen mit den erwarteten Ist-Temperaturen - beschrieben durch die erwarteten Temperaturkurven 12 - abgebildet. Auf einer unteren Ordinatenachse 22b sind die zur Umsetzung des Temperaturzeitverlaufs 38 benötigten Soll-Temperaturen des Heizprogramms zusammen mit den erwarteten Ist-Temperaturen - beschrieben durch die erwarteten Temperaturkurven 12 abgebildet. Die beiden Abszissenachsen 20 bilden jeweils den gleichen Zeitverlauf ab.

Um das Erreichen der ersten Temperatur 24 gegenüber der zweiten Temperatur 26 zu priorisieren, werden bevorzugt die Temperaturkurven 12 berücksichtigt, welche das Erreichen der ersten Temperatur 24 zu dem vorgegeben Zeitpunkt 34 beschreiben, an dem die erste Temperatur 24 vorliegen soll. Weiterhin werden die Temperaturkurven 12 berücksichtigt, welche das Erreichen der zweiten Temperatur 26 beschreiben, ausgehend vom dem Zeitpunkt 34, an dem die erste Temperatur 24 zum letzten Mal vorliegt (siehe Figur 5).

Um die durch den Temperaturzeitverlauf 38 vorgegebene erste Temperatur 24 zum Zeitpunkt 34b zu erreichen, wird im Heizprogramm 32 die erste Temperatur 24 als Soll-Temperatur zu einem Zeitpunkt 34a gespeichert. Der Zeitpunkt 34a liegt vor dem Zeitpunkt 34b. Der Zeitpunkt 34a wird ermittelt, indem das Zeitintervall 30a der Temperaturkurve 12a vom Zeitpunkt 34b abgezogen wird. Die Temperaturkurve 12a beschreibt den erwarteten Verlauf der Ist-Temperatur zum Erreichen der ersten Temperatur 24 zum Zeitpunkt 34b ausgehend von der zweiten Temperatur 24 und in Abhängigkeit von den ermittelten Einflussfaktoren.

Die durch den Temperaturzeitverlauf zwischen den Zeitpunkten 34c und 34b vorgegebene zweite Temperatur 26 kann nicht erreicht werden, wenn davor und danach die erste Temperatur 24 vorliegen soll. Das Zeitintervall 30b, das das Abkühlen auf die zweite Temperatur 26 ab dem Zeitpunkt 34c mit der erwarteten Temperaturkurve 12b beschreibt, hat weitgehend die gleiche Länge der Abstand zwischen den Zeitpunkten 34c und 34d. Das Zeitintervall 30c, das das Aufheizen auf die erste Temperatur 24 zum Zeitpunkt 34d mit der erwarteten Temperaturkurve 12c beschreibt, hat weitgehend die gleiche Länge der Abstand zwischen den Zeitpunkten 34c und 34d. Da die Summe der Zeitintervalle 30b und 30c eine größere Länge hat als der Abstand zwischen den Zeitpunkten 34c und 34d, ist ein Abkühlen auf die zweite Temperatur 26 nicht möglich.

Im Ausführungsbeispiel wird als Soll-Temperatur des Heizprogramms 32 zum Zeitpunkt 34c eine dritte Temperatur 46 gespeichert. Die dritte Temperatur 46 liegt zwischen der ersten Temperatur 24 und der zweiten Temperatur 26. Die dritte Temperatur 46 wird durch die Steuereinheit 60 des Heizsystems 58 als der Temperaturwert gewählt, der am Schnittpunkt zwischen der Temperaturkurve 12b und der Temperaturkurve 12c liegt. Durch das Ermitteln der dritten Temperatur 46 als Soll-Temperatur des Heizprogramms 32 zum Zeitpunkt 34c ist es möglich, dass die Ist-Temperatur des Raums den Wert der ersten Temperatur 24 zum Zeitpunkt 34c und zum Zeitpunkt 34d erreicht.

Damit die Ist-Temperatur des Raums den Wert der ersten Temperatur 24 zum Zeitpunkt 34d erreicht, wird durch die Steuereinheit 60 ein Zeitpunkt 34g ermittelt. Der Zeitpunkt 34g liegt zwischen den Zeitpunkten 34c und 34d. Der Zeitpunkt 34g wird als der Zeitpunkt ermittelt, der am Schnittpunkt zwischen der Temperaturkurve 12b und der Temperaturkurve 12c liegt.

In alternativen Ausführungsformen wird das Heizprogramm anders angepasst, wenn eine Soll-Temperatur des Temperaturzeitverlaufs 38 aufgrund der erwarteten Temperaturkurven 12 nicht erreichbar ist. Beispielsweise ist es denkbar, dass im Heizprogramm 32 eine davor liegende Soll-Temperatur und/oder eine danach liegende Soll-Temperatur angepasst werden. Es ist auch denkbar, dass die vorgegeben Zeitpunkte, an denen die nicht erreichbare Soll-Temperatur und/oder die zeitlich benachbarten Soll-Temperaturen gemäß des Temperaturzeitverlaufs 38 verschoben werden. Beispielsweise könnte bei dem in Figur 5 dargestellten Temperaturzeitverlauf 38 das Heizprogramm 32 so eingestellt werden, dass nicht zum Zeitpunkt 34c auf die dritte Temperatur 46 geregelt wird, sondern etwas früher auf eine etwas niedrigere Temperatur geregelt wird. Auf diese Weise kann durch eine minimale Komforteinbuße Heizenergie gespart werden.

In Varianten des Ausführungsbeispiels wird eine Warnung angezeigt, wenn eine im Temperaturzeitverlauf 38 vorgegeben Soll-Temperatur nicht erreicht werden kann. Das kann insbesondere zeitnah danach erfolgen, nachdem der Benutzer den Temperaturzeitverlauf 38 eingegeben hat. Auf diese Weise kann eine Korrektur des Temperaturzeitverlaufs 38 erfolgen. Der Bedienkomfort wird erhöht. In besonderen Ausführungen werden in der Anzeige der Bedieneinheit des Heizsystems 58 dem Benutzer im Fall einer Warnung mögliche Korrekturen des Temperaturzeitverlaufs 38 vorgeschlagen. Beispielsweise kann eine Soll-Temperatur angepasst und/oder ein Zeitpunkt verschoben werden.

Das Erreichen der ersten Temperatur 24 zum Zeitpunkt 34f (siehe Figur 5) ist möglich. Hier ist das Zeitintervall 30d zum Ermitteln des Zeitpunktes 34e für das Heizprogramm 32 kürzer als das Zeitintervall 30a. Im Ausführungsbeispiel werden die Einflussfaktoren regelmäßig ermittelt. Bei einer ausreichend starken Änderung der Einflussfaktoren - beispielsweise einer Abweichung um mehr als 1°C bei der Außentemperatur - werden die erwarteten Temperaturkurven neu ermittelt. Der Schritt 42 des Verfahrens wird 36 wird alle 30 Minuten wiederholt. Die Außentemperatur wird dazu alle 30 Minuten neu ermittelt. Auf diese Weise kann das Heizprogramm auf geänderte Einflussfaktoren angepasst werden. Es sind auch beliebige andere Zeitintervalle denkbar. Es ist auch denkbar, dass Schritt 42 widerholt wird, wenn sich wenigsten ein Einflussfaktor geändert bzw. ausreichend stark geändert hat.

Im in Figur 5 gezeigten Beispiel ist die Außentemperatur zum Zeitpunkt 34e höher als zum Zeitpunkt 34a. Der Raum kann daher zum Zeitpunkt 34e schneller aufgeheizt werden als zum Zeitpunkt 34a. Das Zeitintervall 30d der Temperaturkurve 12d ist kürzer als das Zeitintervall 30a der Temperaturkurve 12a.

In einem folgenden Schritt 40 wird das Heizsystem 58 mit dem in Schritt 44 ermittelten Heizprogramm 32 betrieben. Die Steuereinheit 60 des Heizsystems 58 sendet das Heizprogramm 32 an den Heizkörperthermostaten 66 des Raums. Der Heizkörperthermostat 66 regelt eine Heizung im Raum in Abhängigkeit von Heizprogramm 32.

Im normalen Betrieb des Heizsystems 58 wird beim Betreiben des Heizsystems 58 in einer Aufheizphase oder einer Abkühlphase die Ist-Temperatur des Raums durch den Heizkörperthermostaten 66 erfasst und an die Steuereinheit 60 gesendet. Die Steuereinheit 60 speichert die Ist-Temperatur als Funktion der Zeit. Auf diese Weise erfasst die Steuereinheit 60 im laufenden Betrieb Temperaturkurven. Die so erfassten Temperaturkurven werden zusammen mit den vorliegenden Einflussfaktoren in den historischen Temperaturdaten abgespeichert. Auf diese Weise werden die historischen Temperaturdaten aktualisiert. Das Verfahren 10 passt sich veränderlichen Einflüssen bzw. Umweltbedingungen an.

In bevorzugten Varianten der Ausführungsform wird bei einem ersten Betrieb des Heizsystems 58 das Verfahren 36 zunächst in einem Lernmodus 48 betrieben. Im Lernmodus 48 wird zunächst in einem Schritt 50 das Heizsystem 58 mit dem Temperaturzeitverlauf 38 als Heizprogramm 32 betrieben. Auf diese Weise wird der vorgegebene Temperaturzeitverlauf 38 durch die Ist-Temperatur wenigstens näherungsweise erreicht. In einem Schritt 52 wird die Ist-Temperatur in Abhängigkeit von der Zeit erfasst und auf diese Weise Temperaturkurven erfasst. Zu einer Temperaturkurve werden die Einflussfaktoren ermittelt. Im Ausführungsbeispiel werden die Einflussfaktoren ermittelt, während die Temperaturkurve erfasst wird. In Varianten wird wenigstens ein Einflussfaktor vor dem Erfassen der Temperaturkurve ermittelt, insbesondere zu einem vorgegebenen Zeitpunkt.

In einem Schritt 54 wird die erfasste Temperaturkurve zusammen mit den dazugehörigen Einflussfaktor in den historischen Temperaturdaten gespeichert.

In einem Schritt 56 wird von der Steuereinheit 60 überprüft, ob die historischen Temperaturdaten eine ausreichende Vorhersagequalität ermöglichen. Beim Betreiben des Heizsystems 58 wird überprüft, wie stark der Verlauf einer erfassten Temperaturkurve von der vorher ermittelten erwarteten Temperaturkurve 12 abweicht. Dazu wird eine relative quadratische Abweichung der erwarteten Temperaturkurve 12 von der erfassten Temperaturkurve ermittelt. Beträgt die relative quadratische Abweichung bei den letzten 10 erwarteten Temperaturkurven 12 weniger als 10%, wird der Lernmodus 48 beendet. Das Verfahren 36 mit Schritt 56 fortgesetzt (Pfad B). Das Heizprogramm 32 wird nun in Abhängigkeit von den historischen Temperaturdaten und dem Temperaturzeitverlauf ermittelt. Beträgt die relative quadratische Abweichung für wenigstens eine der letzten 10 erwarteten Temperaturkurven 12 mehr als 10%, wird das Verfahren 36 weiter im Lernmodus 48 betrieben (Pfad A).

In Varianten des Verfahrens sind auch andere Kriterien zum Beenden des Lernmodus 48 denkbar. Insbesondere kann überprüft werden, ob die tatsächliche Zeit zum Erreichen der Soll-Temperatur 28 hinreichend genau dem vorhergesagten Zeitintervall 30 der erwarteten Temperaturkurve 12 entspricht. Beispielsweise kann überprüft werden, ob die tatsächliche Zeit zum Erreichen der Soll-Temperatur 28 ausreichend oft - beispielsweise bei den letzten 10 oder 20 oder 50 vorhergesagten Zeitintervallen 30 und/oder oder bei wenigstens 60% oder 80% oder 90% der letzten 10 oder 20 oder 50 vorhergesagten Zeitintervallen 30 - um weniger als 5% oder 10% oder 20% von der Länge des vorhergesagten Zeitintervalls 30 abweicht.

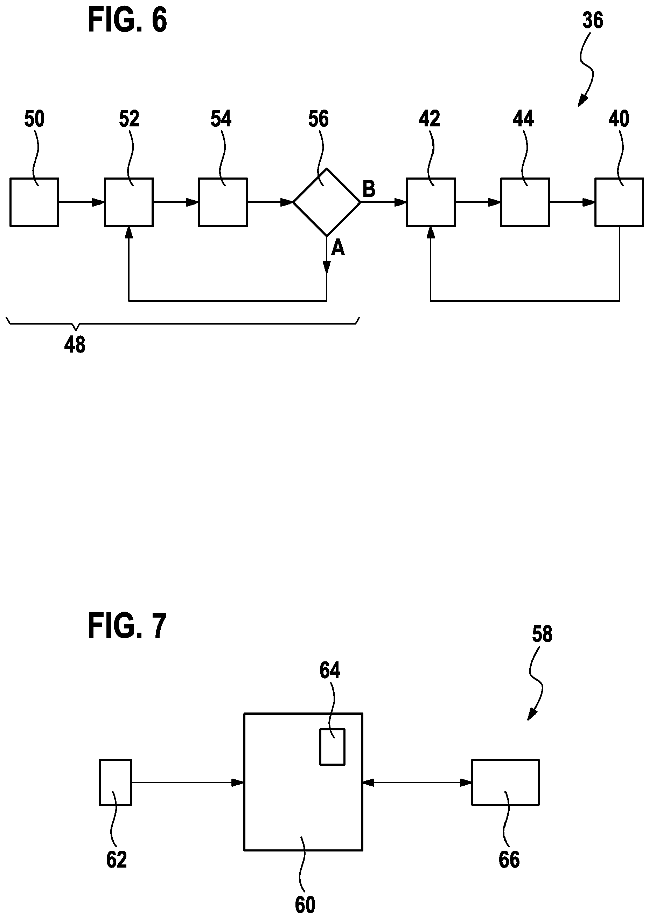

Im Ausführungsbeispiel werden die Schritte 42, 44 und 40 des Verfahrens 36 wiederholt (siehe Figur 6). Auf diese Weise wird das Heizprogramm 32 an veränderliche Einflussfaktoren angepasst.

In alternativen Ausführungsformen wird in Schritt 56 eine Zeitdauer des Lernmodus 48 und/oder eine Betriebsdauer des Heizsystems 58 im Lernmodus 48 überprüft. Der Lernmodus 48 wird beendet, wenn eine vorgegebene Grenzzeitdauer des Lernmodus 48 und/oder der Betriebsdauer im Lernmodus 48 überschritten wird.

In weiteren Ausführungsformen ist es möglich, dass der Lernmodus 48 gestartet wird, wenn das Heizsystem 58 neu installiert wird. Es ist auch denkbar, dass der Lernmodus 48 regelmäßig durchgeführt wird, beispielsweise alle 6 Monate.

Figur 7 zeigt die für die Ausführung der Verfahren 10, 36 wesentlichen Komponenten des Heizsystems 58. Die Steuereinheit 60 des Heizsystems 58 weist einen Datenspeicher, eine Recheneinheit und Mittel zur Kommunikation mit weiteren Komponenten des Heizsystems 58 auf. Die Steuereinheit 60 des Heizsystems 58 ist über eine ZigBee mit dem Außentemperatursensor 62 verbunden. Der Steuereinheit 60 ist dazu eingerichtet, ein die Außentemperatur enthaltendes Signal vom Außentemperatursensor 62 zu empfangen. Die Steuereinheit 60 weist ein WLAN Modul 64 auf. Über das WLAN Modul 64 kann die Steuereinheit 60 über das Internet die Wetterlange von einem Wetterdienst empfangen. Die Steuereinheit 60 ist dazu eingerichtet, über ZigBee Daten an den Heizkörperthermostaten 66 zu senden und Daten vom Heizkörperthermostaten 66 zu empfangen.

Im Ausführungsbeispiel werden die wesentlichen Teile der Verfahren 10 bzw. 36 werden durch die Steuereinheit 60 durchgeführt. Der Heizkörperthermostat 66 ist im Wesentlichen zum Erfassen der Ist-Temperatur sowie zum Regeln der Ist-Temperatur des Raums auf die eingestellte Soll-Temperatur 28. Es sind Varianten denkbar, in denen die wesentlichen Teile des Verfahrens 10 bzw. 36 auf einer Recheneinheit des Heizkörperthermostaten 66 durchgeführt werden. Der Heizkörperthermostat ist in solchen Varianten insbesondere dazu eingerichtet, den wenigstens einen Einflussfaktor zu ermitteln, insbesondere zu Empfangen.

Die zuvor aufgeführten Weiterbildungen können beliebig miteinander kombiniert werden.

## Patentansprüche

1. Verfahren (10) zum Ermitteln einer erwarteten Temperaturkurve (12) beim Aufheizen oder Kühlen eines Raums durch ein Heiz- und/oder Kühlsystem (58) zum Erreichen einer vorgegebenen Soll-Temperatur (28) im Raum - wobei die erwartete Temperaturkurve (12) einen zukünftigen Zeitverlauf einer Ist-Temperatur des Raums vorhersagt, umfassend die folgenden Schritte:
• Ermitteln wenigstens eines Einflussfaktors, insbesondere einer Außentemperatur,
• Ermitteln der erwarteten Temperaturkurve (12) in Abhängigkeit vom wenigstens einem Einflussfaktor, von der Soll-Temperatur und von historischen Temperaturdaten, wobei die erwartete Temperaturkurve ein Zeitintervall (30) zum Erreichen der Soll-Temperatur (28) umfasst und die historischen Temperaturdaten durch früher abgespeicherte Temperaturkurven gebildet werden.

2. Verfahren (10) nach Anspruch 1, **dadurch gekennzeichnet, dass** die Ist-Temperatur des Raums in Abhängigkeit von einer Zeit als Temperaturkurve erfasst wird und der wenigstens eine Einflussfaktor zusammen mit der Temperaturkurve der Ist-Temperatur in den historischen Temperaturdaten gespeichert wird.

3. Verfahren (10) nach einem der vorhergehenden Ansprüche, **dadurch gekennzeichnet, dass** beim Aufheizen oder Kühlen des Raumes eine Temperaturkurve erfasst wird und der wenigstens eine Einflussfaktor ermittelt wird und nach Erreichen der Soll-Temperatur (28) die Temperaturkurve zusammen mit dem wenigstens einem Einflussfaktor in den historischen Temperaturdaten gespeichert wird.

4. Verfahren (10) nach einem der vorhergehenden Ansprüche, **dadurch gekennzeichnet, dass** als Einflussfaktor eine Wetterlage ermittelt wird.

5. Verfahren (10) nach einem der vorhergehenden Ansprüche, **dadurch gekennzeichnet, dass** die erwartete Temperaturkurve (12) durch ein Modell ermittelt wird, wobei das Modell in Abhängigkeit von den historischen Temperaturdaten erstellt wird.

6. Verfahren (36) zum Ermitteln eines Heiz- und/oder Kühlprogramms (32) eines Heiz- und/oder Kühlsystems zum Erreichen eines vorgegebenen Temperaturzeitverlaufs (38) - wobei der Temperaturzeitverlauf (38) aus wenigstens einem Wertepaar aus einer vorgegebenen Soll-Temperatur (28) zu einem vorgegebenen Zeitpunkt (34) gebildet wird, umfassend die Schritte:
• Ermitteln von wenigstens einer Temperaturkurve (12) mit einem Verfahren (10) nach einem der Ansprüche 1 bis 5,
• Ermitteln des Heiz- und/oder Kühlprogramms in (32) Abhängigkeit von der wenigstens einen Temperaturkurve (12).

7. Verfahren (36) nach Anspruch 6, **dadurch gekennzeichnet, dass** eine Warnung angezeigt wird, wenn der vorgegebene Temperaturzeitverlauf (38) nicht erreicht werden kann, insbesondere wenn eine im Temperaturzeitverlauf (38) vorgegebene Soll-Temperatur (28) nicht zum vorgegebenen Zeitpunkt (34) erreichbar ist.

8. Verfahren (36) nach einem der Ansprüche 6 oder 7, **gekennzeichnet durch** einen Lernmodus (48), welcher die folgenden Schritte aufweist:
• Betreiben des Heiz- und/oder Kühlsystems (58) mit dem Temperaturzeitverlauf (38) als Heiz- und/oder Kühlprogramm (32),
• Erfassen einer Temperaturkurve und Ermitteln von wenigstens einem Einflussfaktor,
• Speichern der Temperaturkurve, zusammen mit dem wenigsten einen Einflussfaktor, in den historischen Temperaturdaten.
• Beenden des Lernmodus (48) sobald die historischen Temperaturdaten eine ausreichende Vorhersagequalität ermöglichen.

9. Verfahren (10, 36) nach einem der vorhergehenden Ansprüche, **dadurch gekennzeichnet, dass** das Verfahren (10, 36) und/oder wenigstens ein Schritt des Verfahrens periodisch wiederholt werden, insbesondere in einstellbaren Zeitintervallen bzw. mit einstellbaren Periodendauern.

10. Computerprogramm, welches dazu eingerichtet ist, alle Schritte eines Verfahrens (10, 36) nach einem der vorhergehenden Ansprüche auszuführen.

11. Maschinenlesbares Speichermedium, auf dem das Computerprogramm nach Anspruch 10 gespeichert ist.

12. Heiz- und/oder Kühlsystem (58) - insbesondere ein System zur Hausautomation - oder wenigstens eine Komponente (60, 62, 66) des Heiz- und/oder Kühlsystems (58), das bzw. die durch eine entsprechende integrierte Schaltung und/oder ein auf einem Speicher gespeichertes Computerprogramm nach Anspruch 10 dazu eingerichtet ist, ein Verfahren (10, 36) nach einem der Ansprüche 1 bis 9 auszuführen.

13. Thermostat (66) - insbesondere Heizkörperthermostat (66) - und Steuereinheit (60) eines Heizsystems (66) nach Anspruch 12, die dazu eingerichtet sind, ein Verfahren (10, 36) nach einem der Ansprüche 1 bis 9 auszuführen.
